# EUROPEAN PATENT APPLICATION

(11) **EP 2 058 348 A1**
(43) Date of publication of application: **13.05.2009**
(21) Application number: 07792967.7
(22) Date of filing: 24.08.2007
(51) Int. Cl.: C08G 18/48

(54) **REACTIVE HOT-MELT COMPOSITION AND MOLDED ARTICLE USING THE SAME**

(30) Priority: 31.08.2006 JP 2006235276
(71) Applicant: Ube Industries, Ltd., Ube-shi Yamaguchi 755-8633 (JP)
(72) Inventor: ICHIHASHI, Hideki, Ube-shi Yamaguchi 755-8633 (JP); KANEKO, Takayoshi, Ube-shi Yamaguchi 755-8633 (JP)
(74) Representative: Gille Hrabal Struck Neidlein Prop Roos
(86) International application number: PCT/JP2007/066438
(87) International publication number: WO 2008/026513

(57) **Abstract**

The present invention relates to a reactive hot melt composition that is capable of shortening a molding cycle and is excellent in adhesion with a metal, such as aluminum and the like, and provides (1) a reactive hot melt composition containing a composition containing a crystalline polyesterpolyol and an amorphous polyester polyol, and a polyisocyanate reacted with the composition, and having a semicrystallization time of 150 seconds or less and a crystallization heat of from 30 to 90 J/g, (2) a reactive hot melt composition containing a composition containing 100 parts by mass of a polyol containing from 30 to 95% by mass of a crystalline polyesterpolyol and from 5 to 70% by mass of an amorphous polyesterpolyol, and from 0.05 to 5 parts by mass of a crystallization nucleating agent added to the polyol, and a polyisocyanate reacted with the composition, and (3) a molded article containing the same molded.

## Description

### [Technical Field]

The present invention relates to a reactive hot melt composition that is capable of shortening a molding cycle and is excellent in adhesion with a metal and the like, and a molded article using the same.

### [Background Art]

In recent years, a molding method of providing a molded article by injecting a hot melt material into a die, which is referred to as so-called hot melt molding, is employed for such purposes as sealing an electric or electronic part, and the like. As a molding material for hot melt molding, a polyamide resin (see Patent Document 1), a polyester resin (see Patent Document 2) and the like have been known, but the materials are thermoplastic materials and have such problems as poor heat resistance and mechanical characteristics of the molded article, and the like.

The hot melt material includes a reactive hot melt material that has isocyanate or silane at the molecular terminals and is polymerized and crosslinked through reaction with moisture in the air after the production process. The reactive hot melt material has a relatively low molecular weight, has a low melting temperature as compared to the non-reactive material, such as polyamide, polyester and the like, is excellent in flowability, and can provide high mechanical characteristics and heat resistance after curing through moisture absorption.
Patent Document 3 discloses such a molding method that a moisture-curing polyurethane hot melt adhesive is used as a material for producing a molded article, and the molding material is melted by heating, injected into a closed die under pressure, and solidified by cooling to form a molded article, which is removed from the die and cured by exposing to moisture in the air, and also discloses that the method is suitable for producing an electric member.
However, the conventional moisture-curing polyurethane hot melt material requires time for solidifying by cooling in the die, which provides such a problem that the molding cycle cannot be sufficiently shortened. Furthermore, the conventional hot melt materials often intend to be integrated with an electric or electronic part and the like, there is insufficient development of such a reactive hot melt composition that has strong adhesiveness to a metal, such as aluminum and the like, and the like.

[Patent Document 1] JP-A-2000-133665
[Patent Document 2] JP-A-2003-176341
[Patent Document 3] JP-T-10-511716

### [Disclosure of the Invention]

An object of the present invention is to provide a reactive hot melt composition that is capable of solidifying promptly in a die and shortening a molding cycle and is excellent in adhesion with a metal, such as aluminum and the like, and the like, and a molded article using the same.
As a result of studied on crystallization characteristics of a reactive hot melt composition by the inventors, it has been found that the object can be attained by using a composition that contains a crystalline polyesterpolyol and an amorphous polyesterpolyol and has a particular crystallization rate and a particular crystallization heat, and by adding a particular amount of a crystallization nucleating agent to a polyol containing a crystalline polyesterpolyol and an amorphous polyesterpolyol at a particular ratio.

Accordingly, the present invention provides the following items (1) to (3).
(1) A reactive hot melt composition containing a composition containing a crystalline polyesterpolyol (A) and an amorphous polyester polyol (B), and a polyisocyanate (F) reacted with the composition, and having a semicrystallization time of 150 seconds or less and a crystallization heat of from 30 to 90 J/g under a temperature condition by differential calorimetry of cooling from a melting temperature to 50°C at a temperature decreasing rate of 500°C per minute and then maintaining at 50°C.
(2) A reactive hot melt composition containing a composition containing 100 parts by mass of a polyol containing from 30 to 95% by mass of a crystalline polyesterpolyol (A) and from 5 to 70% by mass of an amorphous polyesterpolyol (B), and from 0.05 to 5 parts by mass of a crystallization nucleating agent (E) added to the polyol, and a polyisocyanate (F) reacted with the composition.
(3) A molded article containing the reactive hot melt composition of the item (1) or (2) molded.

### [Best Mode for carrying out the Invention]

The reactive hot melt composition of the present invention contains a composition containing a crystalline polyesterpolyol (A) and an amorphous polyester polyol (B), and a polyisocyanate (F) reacted with the composition, and has a semicrystallization time of 150 seconds or less and a crystallization heat of from 30 to 90 J/g under a temperature condition by differential calorimetry of cooling from a melting temperature to 50°C at a temperature decreasing rate of 500°C per minute and then maintaining at 50°C, and
contains a composition containing 100 parts by mass of a polyol containing from 30 to 95% by mass of a crystalline polyesterpolyol (A) and from 5 to 70% by mass of an amorphous polyesterpolyol (B), and from 0.05 to 5 parts by mass of a crystallization nucleating agent (E) added to the polyol, and a polyisocyanate (F) reacted with the composition.
The reactive hot melt composition of the present invention is a urethane reactive hot melt composition and contains an oligomer having at terminals thereof an isocyanate group obtained by reacting a polyol and a polyisocyanate. A molded article can be obtained by injecting the composition into a die and solidifying by cooling, and a molded article that is integrated with an electric or electronic part can be obtained by disposing the part in the die. The molded article taken out from the die is then polymerized and crosslinked through reaction of the isocyanate group with water by absorbing moisture in the air to provide excellent mechanical characteristics, heat resistance and adhesion property.

The reactive hot melt composition of the present invention has a semicrystallization time under the aforementioned temperature condition of 150 seconds or less, preferably 100 seconds or less, and more preferably 60 seconds or less, whereby upon molding and solidifying by cooling the reactive hot melt composition in a die, the period of time required for solidifying the product is not too long, and has a crystallization heat (ΔH) of from 30 to 90 J/g, and preferably from 30 to 80 J/g, whereby the composition is sufficient in molding property and adhesion property to a metallic material, such as aluminum and the like, to avoid such problems as peel-off at the adhesion interface and the like.
The semicrystallization time referred herein means a period of time of from the start of cooling from the melting temperature to the time where the crystallization heat reaches 1/2 of the total exothermic amount. The crystallization heat (ΔH) is a value obtained by dividing the total exothermic amount from the start of the crystallization and the end thereof under the same condition by the mass of the specimen.
The components in the invention will be described below.

### Crystalline Polyesterpolyol (A)

The crystalline polyesterpolyol (A) is used from the standpoint of accelerating initial solidification of the reactive hot melt composition, and is preferably a crystalline polyesterpolyol produced by polycondensation of an aliphatic dicarboxylic acid and an aliphatic diol as major components.
The aliphatic dicarboxylic acid is preferably a linear aliphatic dicarboxylic acid having from 6 to 12 carbon atoms, and specific examples thereof include adipic acid, azelaic acid, sebacic acid, decanedioic acid, dodecanedioic acid and the like. Among these, dodecanedioic acid is particularly preferred from the standpoint of reactivity with the aliphatic diol, acceleration of solidification and the like.

The aliphatic diol is preferably a linear aliphatic diol having from 2 to 12 carbon atoms. Specific examples of the aliphatic diol include ethylene glycol, 1,3-propanediol, 1,4-butanediol, 1,5-pentanediol, neopentyl glycol, 1,6-hexanediol, 1,10-decanediol, 1,12-dodecanediol, 2,2-diethylpropanediol, 2-ethyl-2-butylpropanediol, cyclohexanedimethanol and the like. Among these, preferred examples thereof include ethylene glycol, 1,3-propanediol, 1,4-butanediol, 1,5-pentanediol, neopentyl glycol, 1,6-hexanediol, 1,10-decanediol and 1,12-dodecanediol, and more preferred examples thereof include ethylene glycol, 1,4-butanediol, 1,10-decanediol, 1,12-dodecanediol and 1,6-hexanediol.
The aliphatic dicarboxylic acid and the aliphatic diol each may be used solely or as a mixture of two or more thereof, and the crystalline polyesterpolyol (A) may also be a mixture.

The crystalline polyesterpolyol (A) preferably has a semicrystallization time of 30 seconds or less, more preferably 25 seconds or less, and further preferably 20 seconds or less, and preferably has a crystallization heat (ΔH) of 100 J/g or more, more preferably 110 J/g or more, and further preferably 120 J/g or more, under a temperature condition by differential calorimetry (DSC) of cooling from a melting temperature to 50°C at a temperature decreasing rate of 500°C per minute and then maintaining at 50°C. In the case where the crystalline polyesterpolyol (A) has a semicrystallization time of 30 seconds or less, the period of time required for solidifying the resulting reactive hot melt composition is not too long, and in the case where the crystallization heat (ΔH) thereof is 100 J/g or more, the resulting reactive hot melt composition is prevented from being too flexible to deteriorate significantly the shape retaining property of the molded article. The upper limit of the crystallization heat (ΔH) is not particularly limited and is substantially 250 J/g based on the characteristics of the crystalline polyesterpolyol (A).

### Amorphous Polyesterpolyol (B)

The amorphous polyesterpolyol (B) is preferably a polyesterpolyol produced by polycondensation of an aromatic polycarboxylic acid and an aliphatic polyol as major components.
The aromatic polycarboxylic acid is preferably an aromatic polycarboxylic acid having from 8 to 20 carbon atoms, and specific examples thereof include phthalic acid, isophthalic acid, terephthalic acid, trimellitic acid, pyromellitic acid, biphenyldicarboxylic acid and the like. The aromatic polycarboxylic acid may be used in the form of a derivative, such as a polyalkylester thereof, a polyarylester thereof and an acid anhydride thereof. Preferred examples thereof include phthalic acid, isophthalic acid and terephthalic acid, and a dialkylester compound thereof, a diarylester compound thereof, and phthalic anhydride.
The alkyl group of the polyalkylester is preferably an aliphatic saturated hydrocarbon group having from 1 to 8 carbon atoms, and particularly from 1 to 5 carbon atoms, and specific examples thereof include a methyl group, an ethyl group, a propyl group, a butyl group and the like. The aryl group of the polyarylester is preferably an aromatic hydrocarbon group having from 6 to 12 carbon atoms, and specific examples thereof include a phenyl group, a tolyl group, a chlorophenyl group and the like.
The aliphatic polyol is preferably an aliphatic diol having from 2 to 12 carbon atoms, and particularly from 2 to 8 carbon atoms, and specific examples thereof are the same as those described above. Preferred examples thereof include ethylene glycol, 1,4-butanediol, neopentyl glycol and 1,6-hexanediol.

In the amorphous polyesterpolyol (B), the molar number of the aromatic polycarboxylic acid used preferably occupies 50% by mol or more, more preferably 60% by mol or more, and further preferably 70% by mol or more, of the molar number of the total polycarboxylic acid, and an aliphatic polycarboxylic acid may be contained as another dicarboxylic acid.
The aliphatic polycarboxylic acid is preferably a carboxylic acid having from 4 to 12 carbon atoms, and particularly from 4 to 8 carbon atoms, and specifically, adipic acid is particularly preferred. More specifically, a combination of phthalic acid as the aromatic polycarboxylic acid and adipic acid, and a combination of ethylene glycol and neopentyl glycol as the corresponding aliphatic polyol are preferred.
The aromatic polycarboxylic acid and the aliphatic polyol each may be used solely or as a mixture of two or more thereof.

### Production of Polyesterpolyol

The crystalline polyesterpolyol (A) can be obtained from the aliphatic dicarboxylic acid and the aliphatic diol as major components, and the amorphous polyesterpolyol (B) can be obtained from the aromatic polycarboxylic acid and the aliphatic polyol as major components, each by a known polycondensation method. In general, the equivalent ratio of the hydroxyl group of the aliphatic diol or the aliphatic polyol and the carboxyl group of the aliphatic dicarboxylic acid or the aromatic polycarboxylic acid (hydroxyl group/carboxyl group) is preferably from 1.02 to 1.5, and more preferably from 1.05 to 1.3. Specifically, prescribed amounts of the aliphatic dicarboxylic acid and the aliphatic diol, or the aromatic polycarboxylic acid and the aliphatic polyol are polycondensed in the presence or absence of a catalyst at a temperature of about from 150 to 250°C for a period of about from 1 to 50 hours to perform esterification or ester exchange.
The catalyst herein is preferably a titanium catalyst, such as titanium tetrabutoxide and the like, and a tin catalyst, such as dibutyl tin oxide and the like. The catalyst may be charged along with the aliphatic diol and the aliphatic dicarboxylic acid, or the aliphatic polyol and the aromatic polycarboxylic acid, or may be added after performing preliminary polymerization with no catalyst. Upon producing the polyesterpolyol, it is preferred that the both terminals are substantially entirely hydroxyl groups to prevent a carboxyl terminal from being formed, and for the purpose, it is preferred that the catalyst is preferably added after performing preliminary polymerization.

The crystalline polyesterpolyol (A) and the amorphous polyesterpolyol (B) each preferably have a number average molecular weight of from 500 to 20,000, more preferably from 1,000 to 15,000, and particularly preferably from 1,500 to 10,000, from the standpoint of heat resistance, chemical resistance, strength and melt viscosity.
In the present invention, a polycarbonatepolyol (C), a polyetherpolyol (D), a polylactonepolyol, a polybutadienepolyol, a polydimethysiloxanepolyol and the like may be contained as another polyol component in addition to the crystalline polyesterpolyol (A) and the amorphous polyesterpolyol (B). A polyol obtained by random or block copolymerization of the respective polyols may be contained. Among these, a polycarbonatepolyol (C) and/or a polyetherpolyol (D) are preferably contained from the standpoint of adhesion property to a metal and the like.

### Polycarbonatepolyol (C)

Examples of the polycarbonatepolyol (C) capable of being used as another component include a polycarbonatediol obtained by condensation of a known polyol with phosgene, a chloroformate ester, a dialkyl carbonate or a diaryl carbonate, and the like.
Examples of the polyol capable of being used include an aliphatic polyol, an alicyclic polyol, an aromatic polyol and the like. Specifically, preferred examples thereof include 1,6-hexanediol, 1,4-butanediol, 1,3-butanediol, 1,3-propanediol, neopentyl glycol, 1,5-pentanediol, 1,8-nonaediol, 1,9-nonanediol, 2,2-diethylpropanediol, 2-ethyl-2-butyl-1,3-propanediol, trimethylolethane, trimethyolpropane, cyclohexanedimethanol and bisphenol A, and more preferred examples thereof include one containing 1,6-hexanediol. Diethylene glycol, triethylene glycol, tetraethylene glycol, 1,4-bis(β-hydroxyethoxy)benzene, 2,2-bis(4-hydroxyethoxyphenylpropane) and the like, the carbon atoms of which are partially substituted with an oxygen atom or an aromatic ring, may be used. An etherdiol obtained by adding ethylene oxide or propylene oxide to a diol, such as 1,6-hexanediol, 1,4-butanediol, 1,3-butanediol, 1,3-propanediol, neopentyl glycol, 1,5-pentanediol, 1,8-nonanediol, 1,9-nonanediol and the like, may be used.

In the polycarbonatepolyol (C), a polycarbonatediol obtained by condensation of a dialkyl carbonate having an alkyl group having from 1 to 4 carbon atoms, such as dimethyl carbonate, diethyl carbonate and the like, with an aliphatic polyol having an alkanediol having from 2 to 6 carbon atoms, such as 1, 3-propanediol and the like, or an etherdiol obtained by adding ethylene oxide or propylene oxide thereto is particularly preferred.
The polycarbonatepolyol (C), particularly the polycarbonatediol, preferably has a number average molecular weight of from 300 to 20, 000, more preferably from 400 to 10, 000, and particularly preferably from 500 to 5,000, from the standpoint of adhesion property to a metal and the like and melt viscosity.

### Polyetherpolyol (D)

Examples of the polyetherpolyol (D) include polyethylene glycol, polypropylene glycol, polytetramethylene glycol and the like.
The polyetherpolyol (D) preferably has a number average molecular weight of from 200 to 10,000, more preferably from 400 to 5,000, and particularly preferably from 500 to 2,000, from the standpoint of adhesion property to a metal and the like and melt viscosity.
The polycarbonatepolyol (C) and the polyetherpolyol (D) each may be used solely or as a mixture of two or more thereof.

In the case where the crystalline polyesterpolyol (A) and the amorphous polyesterpolyol (B) are used as the polyol in the present invention, the content of the crystalline polyesterpolyol (A) is from 30 to 95% by mass, preferably from 40 to 92% by mass, more preferably from 50 to 90% by mass, and further preferably from 50 to 88% by mass, based on the total polyol, from the standpoint of solidification property and adhesion property to a metal and the like. The content of the amorphous polyesterpolyol (B) is from 5 to 70% by mass, preferably from 8 to 60% by mass, and more preferably from 10 to 50% by mass, based on the total polyol.
In the case where the crystalline polyesterpolyol (A), the amorphous polyesterpolyol (B) and the polycarbonatepolyol (C) are used as the polyol, the content of the crystalline polyesterpolyol (A) is preferably from 35 to 90% by mass, and more preferably from 40 to 80% by mass, the content of the amorphous polyesterpolyol (B) is preferably from 5 to 40% by mass, and more preferably from 10 to 30% by mass, and the content of the polycarbonatepolyol (C) is preferably from 5 to 40% by mass, and more preferably from 10 to 30% by mass, all based on the total polyol.
In the case where the crystalline polyesterpolyol (A), the amorphous polyesterpolyol (B), the polycarbonatepolyol (C) and the polyetherpolyol (D) are used as the polyol, the content of the crystalline polyesterpolyol (A) is preferably from 35 to 90% by mass, more preferably from 35 to 88% by mass, and further preferably from 40 to 80% by mass, the content of the amorphous polyesterpolyol (B) is preferably from 5 to 40% by mass, and more preferably from 10 to 30% by mass, the content of the polycarbonatepolyol (C) is preferably from 5 to 40% by mass, and more preferably from 10 to 30% by mass, and the content of the polyetherpolyol (D) is preferably from 2 to 40% by mass, and more preferably from 5 to 35% by mass, all based on the total polyol.

### Crystallization Nucleating Agent (E)

The crystallization nucleating agent (E) in the invention may be an inorganic crystallization nucleating agent and an organic crystallization nucleating agent.
Specific examples of the inorganic crystallization nucleating agent include carbon black, graphite, talc, kaolinite, montmorillonite, synthetic mica, clay, zeolite, silica, zinc oxide, magnesium oxide, titanium oxide, calcium sulfide, boron nitride, calcium carbonate, barium sulfate, aluminum oxide, neodymium oxide, a metallic salt of phenylphosphonate, and the like.
Among the inorganic crystallization nucleating agents, carbon black and graphite are preferred, carbon black is more preferred, and a carbon black masterbatch is particularly preferred, from the standpoint of acceleration of crystallization.

The carbon black masterbatch is obtained by mixing a base polymer and carbon black to disperse the carbon black uniformly in the masterbatch, and a commercially available product may be used therefor.
Examples of the base polymer for the carbon black masterbatch include polyethylene, polypropylene, an ethylene-vinyl acetate copolymer, polystyrene, wax, polyamide, polyester, polycarbonate, polyurethane, an acrylic resin, an epoxy resin, polypropylene glycol, polyethylene glycol, polytetramethylene glycol and the like. Among these, polystyrene, polyester, polycarbonate, polyurethane, polypropylene glycol, polyethylene glycol and polytetramethylene glycol are preferred, and polystyrene is particularly preferred.
The content of carbon black in the carbon black masterbatch is preferably from 5 to 80% by mass, more preferably from 10 to 70% by mass, and particularly preferably from 20 to 60% by mass.

Specific examples of the organic crystallization nucleating agent include (i) a metallic salt of a phosphorus compound, such as sodium 2,2'-methylenebis(4,6-di-t-butylphenyl)phosphate, sodium bis(4-t-butylphenyl)phosphate and the like, (ii) a metallic salt of an organic carboxylic acid, such as sodium benzoate, potassium benzoate, lithium benzoate, calcium benzoate, magnesium benzoate, barium benzoate, aluminum dibenzoate, aluminum hydroxy-di (t-butylbenzoate), lithium terephthalate, sodium terephthalate, potassium terephthalate, calcium oxalate, sodium laurate, potassium laurate, sodium myristate, potassium myristate, calcium myristate, sodium octacosanoate, calcium octacosanoate, sodium stearate, potassium stearate, lithium stearate, calcium stearate, magnesium stearate, barium stearate, sodium montanoate, calcium montanoate, sodium toluate, sodium salicylate, potassium salicylate, zinc salicylate, aluminum dibenzoate, potassium dibenzoate, lithium dibenzoate, sodium β-naphthalate, sodium cyclohexanecarboxylate and the like, (iii) an organic sulfonate salt, such as sodium p-toluenesulfonate, sodium sulfoisophthalate and the like, (iv) a carboxylic amide, such as stearic amide, ethylenebislauric amide, palmitic amide, hydroxystearic amide, erucic amide, tris(t-butylamide) trimesate and the like, (v) a polymer, such as low density polyethylene, high density polyethylene, polypropylene, polyisopropylene, polybutene, poly-4-methylpentene, poly-3-methylbutene-1, polyvinylcycloalkane, polyvinyltrialkylsilane, a high-melting point polylactic acid and the like, and a sodium salt or a potassium salt of a polymer having a carboxyl group (i.e., so-called an ionomer), such as a sodium salt of a copolymer of ethylene and acrylic acid or methacrylic acid, a sodium salt of a styrene-maleic anhydride copolymer, and the like, and (vi) benzylidene sorbitol and a derivative thereof, aluminum hydroxy-p-t-butylbenzoate, sodium 2,2-methylbis(4,6-di-t-butylphenyl) and the like.
Among the organic crystallization nucleating agents, the metallic salt of a phosphorus compound (i) is preferred, and sodium 2,2'-methylenebis(4,6-di-t-butylphenyl)phosphate is particularly preferred, from the standpoint of acceleration of crystallization.

The addition amount of the crystallization nucleating agent (E) is from 0.05 to 5 parts by mass, preferably from 0.1 to 4 parts by mass, and more preferably from 0.2 to 3 parts by mass, per 100 parts by mass of the total polyol.
In the case where a carbon black masterbatch is used, the using amount of the carbon is preferably from 0.05 to 5 parts by mass, more preferably from 0.1 to 4 parts by mass, and particularly preferably from 0.2 to 3 parts by mass, per 100 parts by mass of the total polyol.
The crystallization nucleating agent (E) used in the invention may be used solely or as a mixture of two or more thereof. A masterbatch having the crystallization nucleating agent dispersed at a high concentration in the polyol or polymer in advance may be produced, and the masterbatch may be added upon production. The crystallization nucleating agent (E) may be added in the step of charging the polyol, or may be added after reacting the polyol and the polyisocyanate.

### Polyisocyanate (F)

The polyisocyanate (F) may be a known aromatic, aliphatic or alicyclic diisocyanate, or a highly functional or high molecular weight polyisocyanate. Specific examples thereof include 1,5-naphthylenediisocyanate, 4,4'-diphenylmethanediisocyanate, 4,4'-diphenyldimethylmethanediisocyanate, 4,4'-dibenzyldiisocyanate, tetraalkyldiphenylmethanediisocyanate, 1,3-phenylenediisocyanate, 1,4-phenylenediisocyanate, tolylenediisocyanate, butane-1,4-diisocyanate, hexamethylenediisocyanate, 2,2,4-trimethylhexamethylenediisocyanate, 2,4,4-trimethylhexamethylenediisocyanate, cyclohexane-1,4-diisocyanate, xylylenediisocyanate, isophoronediisocyanate, dicyclohexylmethane-4,4'-diisocyanate, 1,3-bis(isocyanatemethyl)cyclohexane, methylcyclohexanediisocyanate and the like.
Among these, an aromatic diisocyanate, such as 4,4'-diphenylmethanediisocyanate, tolylenediisocyanate and the like, is preferred.

The ratio of the composition containing the crystalline polyesterpolyol (A) and the amorphous polyesterpolyol (B) to the polyisocyanate (F), and the ratio of the composition containing the polyol containing the crystalline polyesterpolyol (A) and the amorphous polyesterpolyol (B) having the crystallization nucleating agent (E) added thereto to the polyisocyanate (F) are not particularly limited. The molar number of the NCO group in the polyisocyanate (F) is preferably from 1.2 to 3.5, more preferably from 1.5 to 3.0, and particularly preferably from 1.7 to 2.5, per 1 mol of the hydroxyl group of the composition, from the standpoint of reactivity and adhesion property to a metal and the like.
A transition metal compound and an amine may be added as a catalyst depending on necessity. Examples of the transition metal compound catalyst include titanium tetrabutoxide, dibutyl tin oxide, dibutyl tin laurate, tin 2-ethylcaproate, zinc naphthenoate, cobalt naphthenoate, zinc 2-ethylcaproate, molybdenum glycolate, iron chloride, zinc chloride and the like, and examples of the amine catalyst include triethylamine, tributylamine, triethylenediamine, benzylbutylamine and the like.
The reaction condition of the polyol and the polyisocyanate (F) is not particularly limited, and they are generally reacted at a temperature of from 50 to 150°C, and preferably from 70 to 140°C, for a period of from 0.5 to 10 hours. The reaction may be performed in a solvent. The reaction is preferably performed in an inert gas atmosphere, such as nitrogen, argon or the like, and may be performed under a condition with no water content mixed therein, such as in a dry air atmosphere, a sealed condition and the like, without any particular limitation.

### Reactive Hot Melt Composition

The reactive hot melt composition of the present invention can be used as it is as a molding material for an electric part, an electronic part or the like, or may be used after mixing with a plasticizer, a thermoplastic polymer, a tackiness imparting agent, a filler, an antiaging agent and the like, which have been used in an ordinary hot melt composition.
The reactive hot melt composition obtained in the present invention preferably has a viscosity (120°C) of 100,000 mPa·s or less, more preferably from 100 to 50,000 mPa·s, further preferably from 200 to 40,000 mPa·s, and particularly preferably from 500 to 30,000 mPa·s, from the standpoint of flowability.

### Molded Article

The reactive hot melt composition obtained in the present invention has excellent adhesion property to a metal, such as aluminum, copper, magnesium and the like, and particularly aluminum and the like, and can be solidified by cooling in a short period of time in a die to provide a molded article, and therefore the composition can be suitably applied to a molding process that also serves adhesion to another member, sealing and the like, in a continuous operation. For example, the composition is suitable for production of a molded article in such field as metallic industry, resin processing industry, automobile manufacturing industry, electric or electronic part manufacturing industry, semiconductor part manufacturing industry and the like.
Specific examples thereof include a semiconductor sealing member; a circuit board, a device, a switch, a wiring and a plug connector of a part for a computer, a video recorder/player, a camera, a gaming machine, a television set, a radio receiver, a mobile phone or the like; a display device; an electric or electronic parts having a battery inserted therein and integrated therewith by sealing with the hot melt composition; and the like.
The reactive hot melt composition obtained in the present invention may not be used for adhering or sealing with an inserted part, but may be used for producing a molded article by using only the reactive hot melt composition.

The processing temperature of the reactive hot melt composition of the present invention is at least the melting point of the reactive hot melt composition used or more, preferably from 70 to 200°C, and further preferably from 90 to 170°C. A temperature lower than the melting point is not preferred since the processing efficiency is deteriorated, and too high a processing temperature is not preferred since the reactive hot melt composition may be denaturated in some cases.
The apparatus used for molding is not particularly limited, and an injection molding machine and an applicator that are ordinarily used may be used.
The injection molding method is not particularly limited. For example, the reactive hot melt composition is melted at a temperature of from 70 to 200°C, the molten product is injected into a closed die at a pressure of from 1 to 50 bar, a molded article having been solidified by cooling is taken out from the die in a short period of time, and the molded article is then hardened with moisture in the air. A part for molding belonging to the aforementioned industrial fields may be inserted into the closed die as a member for adhesion or sealing.

### [Example]

The present invention will be described more specifically with reference to examples and comparative examples of the present invention below, but the invention is not limited thereto.
The number average molecular weight, the melting point, the crystallization temperature, the semicrystallization temperature and the crystallization heat (ΔH) of the crystalline polyesterpolyol (A), the amorphous polyesterpolyol (B), the polycarbonatediol (C) and the polyetherpolyol (D) used in examples and comparative examples are shown in Table 1.

The details of the symbols in Table 1 are as follows. Crystalline PEPO: Crystalline Polyesterpolyol (A)
A-1; ET3010: ETERNACOLL 3010, produced by Ube Industries, Ltd. (dodecanedioic acid/1,6-hexanediol series polyesterdiol), number average molecular weight: 3,500
A-2; ET3040: ETERNACOLL 3040, produced by Ube Industries, Ltd. (dodecanedioic acid/ethylene glycol series polyesterdiol), number average molecular weight: 3,500
A-3; ET3030: ETERNACOLL 3030, produced by Ube Industries, Ltd. (adipic acid/1,6-hexanediol series polyesterdiol), number average molecular weight: 3,500
A-4; (terephthalic acid/dodecanedioic acid (60/40)/1,6-hexanediol series polyesterdiol), number average molecular weight: 5,000
Amorphous PEPO: Amorphous Polyesterpolyol (B)
B-1; ET5011: ETERNACOLL 5011, produced by Ube Industries, Ltd. (ethylene glycol/neopentyl glycol - adipic acid/phthalic acid series polyesterpolyol), number average molecular weight: 2,500
B-2; ET5010: ETERNACOLL 5010, produced by Ube Industries, Ltd. (ethylene glycol/neopentyl glycol - adipic acid/phthalic acid series polyesterpolyol), number average molecular weight: 2,000
PCD: Polycarbonatediol (C)
C-1; UH-100: UH-CARB100, produced by Ube Industries, Ltd. (1,6-hexanediol/diemthyl carbonate series polycarbonatediol), average molecular weight: 1,000
C-2; UX-2: UX-2, produced by Ube Industries, Ltd. (ethylene oxide adduct of 1,3-propane diol (addition ratio: 1,3-propanediol/ethylene oxide: 1/1.27 by mol)/dimethylcarbonate series polycarbonatediol), number average molecular weight: 2,000
Polyetherpolyol (D)
D-1; PTMG: polytetramethylene glycol, produced by Wako Pure Chemical Industries, Ltd., average molecular weight: 1,000
D-2; PPG: polypropylene glycol (diol type), produced by Wako Pure Chemical Industries, Ltd., average molecular weight: 1,000

The measurement methods for the properties in Table 1 are as follows.

### (1) Number Average Molecular Weight

The hydroxyl value of the polyol was measured according to JIS K 1557, and the number average molecular weight was calculated from the hydroxyl value.

### (2) Melting Point

The temperature was increased from -100°C to 100°C at a temperature increasing rate of 10°C per min by differential calorimetry (DSC), and the temperature of the melting peak was obtained as the melting point.

### (3) Crystallization Temperature

The temperature was decreased from 100°C to -100°C at a temperature decreasing rate of 10°C per min by differential calorimetry (DSC), and the temperature of the crystallization peak was obtained as the crystallization temperature.

### (4) Crystallization Heat (ΔH) and Semicrystallization Time

A specimen was maintained at a melting temperature of 120°C for 5 minutes and then cooled from 120°C to 50°C at a temperature decreasing rate of 500°C per minute, and thereafter the crystallization heat (ΔH) was measured while maintaining at 50°C, by differential calorimetry (DSC) . The period of time of from the start of cooling to the time where the crystallization heat (ΔH) reaches 1/2 of the total exothermic amount was measured and designated as the semicrystallization time.

**[Table 1]**

| | | Kind | Number average molecular weight | Melting point (°C) | Crystallization temperature (°C) | Semicrystallization time (sec) | ΔH (J/g) |
|---|---|---|---|---|---|---|---|
| Crystalline PEPO | A-1 | ET-3010 | 3,500 | 71.6 | 57.2 | 17.8 | 156.1 |
| | A-2 | ET-3040 | 3,500 | 87.2 | 64.3 | 16.4 | 127.1 |
| | A-3 | ET-3030 | 3,500 | 57.4 | 41.8 | 1315.6 | 179.1 |
| | A-4 | TPA/DDA-HD | 5,000 | 79.0 | 56.8 | 41.4 | 31.5 |
| Amorphous PEPO | B-1 | ET-5011 | 2,500 | ND *1 | ND *1 | ND *1 | ND *1 |
| | B-2 | ET-5010 | 2,000 | ND *1 | ND *1 | ND *1 | ND *1 |
| PCD | C-1 | UH-100 | 1,000 | 44.4 | 13.8 | ND *1 | ND *1 |
| | C-2 | UX-2 | 2,000 | ND *1 | ND *1 | ND *1 | ND *1 |
| Polyether-polyol | D-1 | PTMG | 1,000 | 23.9 | 5.0 | ND *1 | ND *1 |
| | D-2 | PPG | 1,000 | ND *1 | ND *1 | ND *1 | ND *1 |

| | | | | | | | |
|---|---|---|---|---|---|---|---|
| *1: ND (not detected) | | | | | | | |

### Example 1 (Production of Reactive Hot Melt Composition)

60 parts by mass of a crystalline polyesterpolyol (ETERNACOLL (registered trademark) 3010, produced by Ube Industries, Ltd.), 15 parts by mass of an amorphous polyesterpolyol (ETERNACOLL (registered trademark) 5011, produced by Ube Industries, Ltd.) and 25 parts by mass of a polycarbonatepolyol (UH-CARB (registered trademark) 100, produced by Ube Industries, Ltd.) were placed in a separable flask, followed by substituting with nitrogen, and then melted under heating to 120°C. The mixture was then subjected to a dehydration treatment at 120°C and 50 mmHg for 1 hour under stirring at 250 rpm, followed by performing nitrogen substitution for 10 minutes. Thereafter, the polyol mixture was cooled to 80°C, to which 1 part by mass of a carbon black masterbatch (Black SHPA-817, produced by Sumika Color Co., Ltd., carbon black content: 40%) was added, and mixed by stirring at 150 rpm for 1 hour. 4,4'-Diphenylmethanediisocyanate (MDI) having been heated to 60°C in advance (1.1 times by mol the OH groups in the charged polyesterpolyol mixture) was added at a time thereto, and the mixture was further stirred at 120°C for 1.5 hours under a nitrogen atmosphere to provide a reactive hot melt composition.
The resulting reactive hot melt composition was measured for number average molecular weight, melting point, crystallization temperature, viscosity, crystallization heat (ΔH) and semicrystallization time by the aforementioned measurement methods. The composition was also evaluated for solidification time and adhesion property. The results are shown in Tables 2 and 3.

The details of the symbols in Table 2 are as follows, and the others are the same as above.
Crystallization Nucleating Agent (E)
CBM: carbon black masterbatch, Black SHPA-817, produced by Sumika Color Co., Ltd., carbon black content: 40% by weight
NA-11: ADK Stab NA-11, produced by ADEKA Corporation, sodium 2,2'-methylenebis(4,6-di-t-butylphenyl)phosphate Polyisocyanate (F)
MDI: 4,4'-diphenylmethanediisocyanate

The evaluation methods in Table 3 are as follows, and the others are the same as above.

### (1) Viscosity

A specimen was melted at 120°C and measured with a B-type viscometer.

### (2) Solidification Time

A Teflon plate having a thickness of 2 mm cut at the center thereof into a circular shape having a diameter of 2 cm was fixed to an aluminum plate having a thickness of 1.6 mm to prepare a mold for measuring solidification time. 0.63 mL of a reactive hot melt composition melted at 120°C was cast into the circular hole cut in the Teflon plate, onto which another aluminum plate was placed. The assembly was fastened under pressure, and the period of time until the reactive hot melt composition was solidified was measured (room temperature of 23°C).

### (3) Adhesion Property

A hot melt melted at 120°C was coated to a size having a diameter of about 2 cm and a thickness of about 2 mm on an aluminum plate having a thickness of 1.6 mm, and allowed to cool at room temperature for solidification. After allowing to stand for 10 minutes, the solidified reactive hot melt composition was applied with a force at an edge part thereof with a spatula to peel the aluminum plate and the reactive hot melt composition from each other, and the adhesion property was evaluated by the following evaluation standard.

### Evaluation Standard

AA: Not peeled off upon application of force deforming solidified product
A: Peeled off upon application of strong force
B: Peeled off upon application of weak force
C: Peeled off spontaneously after allowing to stand

Examples 2 to 14 and Comparative Examples 1 to 3 (Production of Reactive Hot Melt Composition)
The components were mixed and processed in the same manner as in Example 1 except that the formulations shown in Table 2 were used instead of the formulation in Example 1 to provide reactive hot melt compositions. The results are shown in Tables 2 and 3.

**[Table 2]**

| | Crystalline PEPO | | | | Amorphous PEPO | | PCD | | PTMG | PPG | Crystallization nucleating agent | | MDI |
|---|---|---|---|---|---|---|---|---|---|---|---|---|---|
| | A-1 | A-2 | A-3 | A-4 | B-1 | B-2 | C-1 | C-2 | D-1 | D-2 | CBM | NA-11 | |
| Example 1 | 60 | - | - | - | 15 | - | 25 | - | - | - | 1 | - | 27.2 |
| Example 2 | 30 | 60 | - | - | 10 | - | - | - | - | - | 1 | - | 15.8 |
| Example 3 | 75 | - | - | - | 10 | - | 15 | - | - | - | 1 | - | 22.1 |
| Example 4 | 75 | - | - | - | 10 | - | 15 | - | - | - | 1 | 0.6 | 22.1 |
| Example 5 | - | 75 | - | - | 10 | - | 15 | - | - | - | 1 | - | 21.4 |
| Example 6 | 75 | - | - | - | - | 10 | 15 | - | - | - | 1 | - | 23.0 |
| Example 7 | 35 | 40 | - | - | 10 | - | 15 | - | - | - | 1 | - | 21.9 |
| Example 8 | - | 50 | - | - | 14.3 | - | 7.1 | 28.6 | - | - | 0.7 | - | 18.3 |
| Example 9 | - | 53.8 | - | - | 15.4 | - | 7.7 | - | 23.1 | - | 1 | - | 18.4 |
| Example 10 | 46.7 | - | - | - | 13.3 | - | 6.7 | - | 33.3 | - | 0.7 | - | 21.5 |
| Example 11 | 46.7 | - | - | - | 13.3 | - | 6.7 | - | 33.3 | - | 0.7 | - | 21.4 |
| Example 12 | 46.7 | - | - | - | 13.3 | - | 6.7 | - | - | 33.3 | 0.7 | - | 21.4 |
| Example 13 | 60 | - | - | - | 15 | - | 25 | - | - | - | - | - | 27.2 |
| Example 14 | 46.7 | - | - | - | 13.3 | - | 6.7 | - | - | 33.3 | - | - | 21.4 |
| Comparative Example 1 | 100 | - | - | - | - | - | - | - | - | - | - | - | 16.0 |
| Comparative Example 2 | - | - | 100 | - | - | - | - | - | - | - | - | - | 14.3 |
| Comparative Example 3 | - | - | - | 100 | - | - | - | - | - | - | - | - | 11.0 |

| | | | | | | | | | | | | | |
|---|---|---|---|---|---|---|---|---|---|---|---|---|---|
| The units are parts by mass. | | | | | | | | | | | | | |

**[Table 3]**

| | Melting point (°C) *1 | Crystallization temperature (°C) | Viscosity (120°C) (mPa·s) | Semicrystallization time (sec) | ΔH (J/g) | Solidification time (sec) | Evaluation of adhesion property |
|---|---|---|---|---|---|---|---|
| Example 1 | 64.7 | 52.4 | 4,000 | 25.3 | 54.4 | 15 | A |
| Example 2 | 73.7 (66.1) | 55.6 | 4,600 | 26.3 | 65.6 | 11 | A |
| Example 3 | 65.6 | 53.3 | 5,200 | 23.7 | 70.2 | 13 | A |
| Example 4 | 64.7 | 53.4 | 5,800 | 23.1 | 69.0 | 12 | A |
| Example 5 | 74.9 | 58.2 | 9,000 | 24.7 | 53.1 | 9 | AA |
| Example 6 | 64.9 | 52.6 | 4,000 | 24.3 | 69.2 | 16 | A |
| Example 7 | 64.9 (71.1) (74.2) (78.8) | 53.6 | 3,600 | 25.5 | 67.7 | 20 | A |
| Example 8 | 75.1 | 58.2 | 20,600 | 24.3 | 33.6 | 16 | A |
| Example 9 | 74.9 | 51.7 | 39,000 | 48.2 | 39.7 | 12 | A |
| Example 10 | 62.9 (66.8) | 49.7 | 22,600 | 37.2 | 40.9 | 33 | A |
| Example 11 | 63.1 (66.9) | 50.1 | 14,000 | 34.0 | 41.6 | 34 | A |
| Example 12 | 63.1 (66.9) | 50.3 | 8,200 | 34.3 | 41.4 | 33 | A |
| Example 13 | 66.6 (60.6) | 45.0 | 4,000 | 70.2 | 52.4 | 25 | A |
| Example 14 | 66.3 (59.3) | 40.1 | 13,400 | 127.3 | 43.6 | 40 | |
| Comparative Example 1 | 65.0 | 51.7 | 7,500 | 30.2 | 94.3 | 20 | C |
| Comparative Example 2 | 49.0 | 29.9 | 7,500 | ND *2 | ND *2 | 45 | C |
| Comparative Example 3 | 82.3 (33.3) | 51.1 (21.0) | 260,000 | 195.4 | 34.9 | 100 | A |

| | | | | | | | |
|---|---|---|---|---|---|---|---|
| *1: Numerals in ( ) in the melting point and the crystallization temperature indicates a subpeak temperature. *2: ND (not detected) | | | | | | | |

In Table 3, as comparing the reactive hot melt compositions of the present invention shown in Examples with the compositions of Comparative Examples 1 to 3, the cooling solidification time is as short as 40 seconds or less owing to the semicrystallization time of 150 seconds or less to shorten the molding cycle although no significant difference is found in melting point, crystallization temperature and viscosity. Furthermore, the crystallization heat (ΔH) is in a range of from 30 to 80 J/g, particularly from 30 to 75 J/g, whereby the compositions are excellent in molding property and adhesion property to a metallic material to avoid such problems as peel-off at the adhesion interface and the like.

### Example 15 (Production of Molded Article having Printed Circuit Board integrated)

A molded article having a printed circuit board inserted thereto was produced by using the reactive hot melt composition obtained in Example 1 in the following manner.
(1) The reactive hot melt composition was placed in a gear pump type applicator (set at 120°C for the tank, 120°C for the tube and 120°C for the nozzle) and melted at 120°C.
(2) A die capable of providing a molded article having a plate shape with a length of 50 mm, a width of 30 mm and a thickness of 4 mm was prepared, and after applying a releasing agent thereto, a printed circuit board with a length of 45 mm, a width of 25 mm and a thickness of 1 mm was placed inside the die at the center of the molded article with a bearing pin.
(3) The nozzle of the applicator was connected to the injection channel of the die while preventing leakage by pressure from occurring, and the reactive hot melt composition was injection-molded under the condition of a processing temperature of 120°C, a die temperature of 30°C, a pump pressure of 5 MPa and an injection time of 15 seconds.
(4) The molded article was retained in the die for 20 seconds, and after cooling, the molded article was taken out by opening the die and hardened with moisture in the air at room temperature. The resulting molded article was free of peel-off, cracks and the like.

### [Industrial Applicability]

The reactive hot melt composition of the present invention can be integrated through rapid solidification in a die upon production of electric and electronic parts and the like, thereby shortening the molding cycle. Furthermore, a reactive hot melt composition that is particularly excellent in adhesion property to a metal, such as aluminum and the like can be provided.

## Claims

1. A reactive hot melt composition comprising a composition containing a crystalline polyesterpolyol (A) and an amorphous polyester polyol (B), and a polyisocyanate (F) reacted with the composition, and having a semicrystallization time of 150 seconds or less and a crystallization heat of from 30 to 90 J/g under a temperature condition by differential calorimetry of cooling from a melting temperature to 50°C at a temperature decreasing rate of 500°C per minute and then maintaining at 50°C.

2. A reactive hot melt composition comprising a composition containing 100 parts by mass of a polyol containing from 30 to 95% by mass of a crystalline polyesterpolyol (A) and from 5 to 70% by mass of an amorphous polyesterpolyol (B), and from 0.05 to 5 parts by mass of a crystallization nucleating agent (E) added to the polyol, and a polyisocyanate (F) reacted with the composition.

3. The reactive hot melt composition as claimed in claim 1 or 2, wherein the crystalline polyesterpolyol (A) has a semicrystallization time of 30 seconds or less and a crystallization heat of 100 J/g or more under a temperature condition by differential calorimetry of cooling from a melting temperature to 50°C at a temperature decreasing rate of 500°C per minute and then maintaining at 50°C.

4. The reactive hot melt composition as claimed in one of claims 1 to 3, wherein the crystalline polyesterpolyol (A) is obtained from dodecanedioic acid and hexanediol.

5. The reactive hot melt composition as claimed in one of claims 1 to 4, wherein a content of the crystalline polyesterpolyol (A) is from 35 to 90% by mass, a content of the amorphous polyesterpolyol (B) is from 5 to 40% by mass, and a content of the polycarbonatepolyol (C) is from 5 to 40% by mass, all based on the total polyol.

6. The reactive hot melt composition as claimed in one of claims 1 to 5, wherein a content of the crystalline polyesterpolyol (A) is from 35 to 88% by mass, a content of the amorphous polyesterpolyol (B) is from 5 to 40% by mass, a content of the polycarbonatepolyol (C) is from 5 to 40% by mass, and a content of the polyetherpolyol (D) is from 2 to 40% by mass, all based on the total polyol.

7. The reactive hot melt composition as claimed in one of claims 1 to 6, wherein the crystallization nucleating agent (E) is carbon black and/or a metallic salt of a phosphorus compound.

8. A molded article comprising the reactive hot melt composition as claimed in one of claims 1 to 7 molded.

9. The molded article as claimed in claim 8, wherein the molded article is an electric part or an electronic part.
